(19) Europäisches Patentamt / European Patent Office / Office européen des brevets

(11) **EP 2 885 254 B1**

(12) **FASCICULE DE BREVET EUROPEEN**

(45) Date de publication et mention de la délivrance du brevet:
**09.06.2021 Bulletin 2021/23**

(21) Numéro de dépôt: **13762165.2**

(22) Date de dépôt: **12.08.2013**

(51) Int Cl.:
*C03C 17/00* (2006.01)     *C03C 17/34* (2006.01)
*F24C 15/10* (2006.01)     *F24C 7/08* (2006.01)
*G02B 5/22* (2006.01)     *G09F 23/00* (2006.01)

(86) Numéro de dépôt international:
**PCT/FR2013/051925**

(87) Numéro de publication internationale:
**WO 2014/027161 (20.02.2014 Gazette 2014/08)**

(54) **ARTICLE VITROCÉRAMIQUE A AFFICHAGE LUMINEUX COLORE**

GLASKERAMIKARTIKEL MIT FARBIGER LICHTANZEIGE

GLASS CERAMIC ITEM WITH COLOURED LIGHT DISPLAY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.08.2012 FR 1257797**

(43) Date de publication de la demande:
**24.06.2015 Bulletin 2015/26**

(73) Titulaire: **Eurokera S.N.C.**
**02400 Château-Thierry (FR)**

(72) Inventeurs:
• **LALUET, Jean-Yves**
  **F-75019 Paris (FR)**

• **GUISET, Pierrick**
  **F-91300 Massy (FR)**
• **FERRIZ, Gaëlle**
  **F-51100 Reims (FR)**
• **MALLET, Claire**
  **H2V 1V7 Outremont QC (CA)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2011/089327      WO-A1-2012/001300**
**WO-A1-2012/168011      WO-A1-2012/172257**
**DE-A1- 10 309 225      DE-A1-102010 004 741**

**Description**

La présente invention concerne le domaine des vitrocéramiques. Plus précisément, elle concerne un article (ou produit) en vitrocéramique, notamment une plaque vitrocéramique, destiné(e) en particulier à couvrir ou recevoir des éléments de chauffage, ledit article étant pourvu d'un affichage lumineux coloré (ou d'au moins une zone lumineuse colorée) en au moins une zone choisie de l'article.

Les ventes d'articles tels que des plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité ; elle doit également présenter une transmission élevée dans les longueurs d'onde du domaine de l'infrarouge dans le cas notamment des plaques à foyers radiants, voir par exemple WO 2012/001300.

Les principales plaques actuelles sont de couleur sombre, en particulier noires, colorées par exemple en utilisant de l'oxyde de vanadium ajouté aux matières premières du verre-mère avant la fusion, cet oxyde conférant après céramisation une teinte orange-brune soutenue liée à une réduction du vanadium. D'autres colorants, tels que les oxydes de cobalt et de manganèse, peuvent également être utilisés. Avec un coefficient de transmission faible en dessous de 600nm, ces plaques permettent surtout la visibilité d'éléments rouges comme les éléments chauffants portés à haute température ou encore les affichages lumineux à base de diodes électroluminescentes monochromatiques de couleur rouge. Des plaques vitrocéramiques plus transparentes (telles que les vitrocéramiques KeraVision ou KeraResin, commercialisées par la société EuroKera), existent également, permettant l'affichage d'autres couleurs "pures" (produites par des diodes monochromatiques), telles que le bleu ou le vert.

Il est cependant apparu récemment un besoin de pouvoir visualiser une variété plus importante d'affichages avec des couleurs plus variées, faisant appel en particulier à des couleurs de synthèse produites par des mélanges à plusieurs longueurs d'onde (cas de la couleur blanche). Le coefficient de transmission des plaques vitrocéramiques n'étant pas uniforme sur l'ensemble du spectre visible, les amplitudes relatives des différentes composantes (spectrales) de la lumière transmise sont cependant généralement modifiées, la couleur après transmission pouvant dévier fortement de celle produite par la source.

En particulier, les technologies à base de diodes électroluminescentes (LEDs) habituellement employées pour produire une lumière blanche (par exemple avec une source de lumière bleue recouverte d'un phosphore absorbant une partie de ladite lumière et réémettant de la lumière jaune) ne peuvent pas être utilisées pour produire une couleur blanche à travers une vitrocéramique. Alors que la balance entre le bleu et le jaune est initialement telle que leur mélange donne une sensation visuelle de couleur blanche, du fait du passage dans la vitrocéramique, l'absorption n'étant pas homogène (bleu fortement absorbé, jaune moins), l'œil ne perçoit plus du blanc à travers la vitrocéramique, mais perçoit par exemple du rose, de l'orange ou du rouge.

De même, l'utilisation de LEDs à émissions polychromatiques (par exemple formées de trois sources monochromatiques d'intensités réglées de manière indépendante, telles que des LEDs de type « RGB » avec trois sources : rouge, verte et bleue) afin de donner par exemple du blanc, n'est pas appropriée, l'absorption inhomogène de la vitrocéramique sur le domaine visible déséquilibrant la balance entre les couleurs, et produisant également un rendu rose, orange ou rouge. On peut ajuster l'intensité respective des composantes RGB, mais le mélange doit être parfait (notamment spatialement - bon recouvrement des faisceaux lumineux - et temporellement - même phase d'une éventuelle modulation d'amplitude des faisceaux notamment) sous peine d'inhomogénéités ; l'espacement des trois zones émissives est souvent cause d'un mauvais mélange, entrainant une couleur non uniforme. De même, les 3 puces R, G et B subissent des dérives thermiques et des vieillissements différents, laissant apparaître dans le temps des inhomogénéités colorimétriques. Selon les lots de fabrication des LEDs rouge, verte et bleue, on observe en outre des variations de couleur d'une LED RGB à une autre. Les LEDs RGB sont également plus volumineuses que les LEDs habituellement utilisées pour les afficheurs et s'intègrent plus difficilement sur un bandeau de commande.

Pour ces raisons, l'affichage en blanc ou pour une majorité de couleurs autres que rouge, en particulier pour des couleurs de synthèse, est absent des vitrocéramiques, notamment sombres ou colorées, du fait de leur absorption inhomogène sur le domaine du visible, une lumière non monochromatique les traversant voyant sa couleur modifiée, ceci étant d'autant plus critique que son spectre est large, comme pour les sources blanches.

Le but de la présente invention a donc été de fournir de nouveaux articles vitrocéramiques (tels que des plaques) améliorés, en particulier de mettre au point de nouveaux articles vitrocéramiques présentant un affichage lumineux coloré plus varié, notamment autre que rouge, et en particulier blanc, cet affichage ne présentant pas les inconvénients précédemment cités, offrant une large gamme de couleurs précises, et convenant notamment aux plaques de couleur sombre et/ou très absorbantes et/ou elles-mêmes colorées. Plus particulièrement, la présente invention a cherché une solution adaptée ou s'appliquant facilement à tous types de vitrocéramiques (lisses ou avec picots ou reliefs, claires ou sombres, colorées ou non, etc.), cette solution permettant d'obtenir une ou des zones de couleur(s) choisie(s), les couleurs obtenues étant uniformes, cette solution étant en outre simple à mettre en œuvre et compatible avec le procédé de fabrication des vitrocéramiques et leurs contraintes d'utilisation.

Ce but est atteint par le nouvel article selon la présente revendication 1, présentant au moins une zone lumineuse (en particulier d'affichage) colorée (au sens large incluant également le blanc), ledit article comprenant au moins un substrat vitrocéramique (en particulier une plaque, destinée par exemple à couvrir ou recevoir au moins un élément chauffant) ayant une transmission lumineuse allant de 0,8% à 40% et une transmission optique d'au moins 0,1% pour au moins une longueur d'onde comprise dans le domaine allant de 420 à 780 nm (situé dans le domaine du visible), au moins une source lumineuse (et/ou un afficheur intégrant ladite source) et au moins un filtre jet d'encre d'épaisseur comprise entre 1 et 50 $\mu$m (couplé (en fonctionnement) à ladite source (de même qu'à la plaque, la zone colorée obtenue résultant notamment de (l'action/l'effet de) ces trois composants)), de façon à former, en particulier, au moins une zone lumineuse, notamment un affichage (visualisation de données/ signalisation ou motifs décoratifs par exemple), colorée en au moins une zone du substrat vitrocéramique. Comme explicité ultérieurement, ce filtre peut être notamment combiné (en termes de positionnement) à la source et/ou au substrat vitrocéramique et/ou à un élément intermédiaire (par exemple un moyen d'extraction), et est de préférence solidaire du substrat vitrocéramique.

Par "filtre jet d'encre" on entend un filtre optique (à action sur la transmission de la lumière), en particulier coloré (l'action sur la transmission de la longueur d'onde se faisant en fonction des longueurs d'onde), imprimé (ou appliqué) par jet d'encre (ou obtenu par impression jet d'encre), ce filtre étant notamment sous forme de film ou couche, étant en particulier à base d'au moins une encre (pouvant comprendre une ou des matières organique(s) et/ou inorganique(s) et/ou minérale(s)), et étant (semi-)transparent (dans le sens notamment où il est transparent à certaine(s) longueur(s) d'onde du visible et non transparent à/en bloquant/en affectant d'autre(s), ce filtre présentant une transmission lumineuse d'au moins 5%, notamment d'au moins 20%, et en particulier d'au moins 30%), en particulier permettant d'absorber et/ou de réfléchir et/ou de réémettre certaines longueurs d'onde du spectre visible. De façon particulièrement avantageuse, le filtre est un filtre par absorption (l'action sur la transmission de la lumière se faisant par absorption à certaines longueurs d'onde, la lumière absorbée pouvant notamment être convertie en chaleur et/ou émise à d'autres longueurs d'onde). Il peut être appliqué ou imprimé sur le substrat vitrocéramique et/ou sur au moins une source lumineuse et/ou un élément intermédiaire, comme explicité ultérieurement. Au moins une source lumineuse est couplée (en fonctionnement) à au moins un tel filtre correctif (c'est-à-dire que son rayonnement émis passe par ledit filtre) afin de produire l'affichage recherché au travers du substrat vitrocéramique auquel cet ensemble est combiné.

Le filtre précité est choisi en fonction de (ou est propre à, ou dépend de) la vitrocéramique (en l'occurrence de la transmission optique - ou transmission spectrale ou dispersion spectrale - du substrat vitrocéramique, la transmission optique/spectrale dépendant elle-même de la composition et de l'épaisseur dudit substrat) et éventuellement de la source lumineuse, comme explicité ultérieurement, de façon à former au moins une zone lumineuse colorée de coordonnées colorimétriques fixées, en particulier une zone colorée autre que rouge, et notamment une zone colorée de couleur blanche ou d'une couleur de synthèse obtenue par un mélange à plusieurs longueurs d'onde.

La présente invention a mis en évidence que la sélection de vitrocéramiques, qui bien que sombres le cas échéant, présentent les transmissions lumineuse et optique mentionnées selon l'invention, et leur combinaison à des filtres sélectionnés suivants les besoins comme évoqué précédemment, afin de compenser ou corriger, de façon contrôlée, la dispersion spectrale de la vitrocéramique, permet d'obtenir le rendu souhaité des couleurs, quel que soit le spectre initial de la source lumineuse regardée à travers ladite vitrocéramique, sans être limité par le choix des sources lumineuses ni contraint à des transformations complexes de celles-ci ou de la vitrocéramique. La présente invention a de surcroit mis en évidence que l'utilisation de filtres jet d'encre d'épaisseur comprise entre 5 et 50 $\mu$m permet d'obtenir avec avantages les articles vitrocéramiques améliorés recherchés sans les défauts ou inconvénients pouvant être observés avec d'autres types de filtres.

Le filtre, choisi en fonction de la vitrocéramique et éventuellement de la source (selon l'objectif recherché comme explicité ultérieurement), permet d'obtenir la transmission souhaitée de l'ensemble filtre/vitrocéramique (avec correction de couleur ou obtention d'une transmission neutre, c'est-à-dire sans altération de la couleur initiale de la source). L'invention convient notamment aux plaques vitrocéramiques sombres ou colorées remplissant les critères de transmission, qu'elle dote d'une fonction de coloration contrôlée de l'affichage. Elle permet d'atteindre, pour une source de couleur donnée, une couleur cible donnée, et notamment de réaliser des affichages/afficheurs résultants de couleur identique ou non à la couleur initiale, notamment des afficheurs résultants blancs ou de couleurs inédites pour vitrocéramiques. L'invention permet également de produire des zones de colorations variées sur une vitrocéramique en associant, par exemple des colorations particulières à des espaces ou des fonctions.

L'invention s'applique également avec les mêmes avantages aux substrats vitrocéramiques plans et à ceux présentant des surfaces non planes ou munies d'irrégularités, par exemple aux plaques vitrocéramiques munies de picots en face inférieure, le filtre jet d'encre selon l'invention pouvant épouser la surface irrégulière concernée avec une épaisseur constante, contrairement à d'autres types de filtres et/ou ceux déposés à des épaisseurs plus importantes.

Par exemple, il s'avère que les filtres sous forme de feuille(s) polymère(s) ne permettent pas d'épouser précisément la surface des picots, laissant des espaces vides entre ces derniers, ceci entrainant des réflexions différentes entre la vitrocéramique et le filtre suivant que l'on se trouve à l'aplomb des picots ou entre ces derniers. Le chemin suivi par la lumière n'est ainsi pas uniforme sur l'ensemble de la zone munie du filtre. Le choix d'un filtre déposé par sérigraphie permet de supprimer ces vides et réflexions résultantes, mais résulte à l'inverse en des épaisseurs de filtre entre les picots supérieures aux épaisseurs aux sommets des picots. De ce fait, la lumière ne traverse pas la même épaisseur de filtre sur l'ensemble de la zone concernée, ce qui mène le cas échéant (affichage blanc par exemple) à des différences nettes de couleur résultante entre sommets de picots et creux de picots. L'application par jet d'encre selon l'invention permet avantageusement de s'affranchir de ces 2 inconvénients (réflexions et inhomogénéité d'épaisseur) et d'obtenir une bonne uniformité de la couleur résultante

Par ailleurs, comme explicité ultérieurement, le filtre jet d'encre peut être avantageusement formé de compositions résistant thermiquement aux températures auxquelles les zones concernées des articles selon l'invention sont soumises, par exemple aux températures d'exposition des bandeaux de commande des plaques vitrocéramiques, contrairement aux filtres sous forme de feuilles polymères, ces derniers moins résistants à la chaleur devant être déportés de la vitrocéramique pour ne pas être dégradés, ceci augmentant la complexité de mise en œuvre du filtre. La solution selon l'invention est particulièrement simple de mise en œuvre et pérenne.

En outre, après détermination du spectre du filtre permettant l'obtention de la couleur désirée, comme explicité ultérieurement, il n'existe pas forcément de feuille polymère (ou de combinaison de feuilles polymère) présentant exactement ce spectre, obligeant à choisir le filtre se rapprochant le plus du filtre cible et obligeant d'avoir en stock un grand nombre de filtres différents. On ne peut donc pas atteindre une couleur cible de manière aussi précise que désirée. Avec de tels filtres polymères, on ne peut pas non plus s'adapter finement aux variations du spectre de transmission de la vitrocéramique dues aux variations naturelles du procédé de fabrication, telles que les variations de composition et d'épaisseur.

Le choix d'un filtre déposé par sérigraphie autorise quant à lui un meilleur ajustement des couleurs, par dosage précis des quantités de pigments utilisés pour ce type de filtre, cependant, il existe des incertitudes dans les pesées et cela implique la préparation d'une solution particulière pour chaque lot de fabrication en fonction des variations de composition ou d'épaisseur de la vitrocéramique.

Dans la présente invention, l'ajustement des couleurs est en revanche particulièrement simple et précis. En particulier, le filtre est défini par un ratio entre différentes couleurs, dont généralement des couleurs élémentaires ou primaires (telles que le cyan, le magenta et le jaune), par exemple est défini par un ratio entre le cyan, le magenta, le jaune et le noir, et est obtenu avantageusement par superposition des dépôts (des encres) de chacune des couleurs dans les ratios (ou rapports ou proportions) retenus. Il n'est ainsi pas nécessaire de préparer une solution avec les bons ratios au préalable ; les ratios sont par exemple simplement entrés dans le logiciel de gestion de l'imprimante au moment de l'impression. Ils peuvent donc être ajustés très aisément en fonction des lots de vitrocéramiques utilisés (d'épaisseur et de composition variables selon la variation naturelle du procédé de fabrication) de manière à obtenir une couleur résultante constante au travers des différents lots de vitrocéramiques avec une source lumineuse donnée.

L'article selon l'invention peut être avantageusement une plaque de cuisson, mais peut être également tout autre article en vitrocéramique présentant un affichage fonctionnel ou décoratif, voire un article ou module ou ensemble ou système (à vocation principale) d'affichage (décoratif et/ou fonctionnel) avec au moins une source lumineuse couplée à au moins un filtre correctif, cet ensemble étant couplé à au moins une vitrocéramique, en particulier plaque, conformément à l'invention.

Par articles (en) vitrocéramiques, on entend non seulement les articles réalisés en vitrocéramique proprement dite mais également les articles en tout autre matériau analogue convenant pour les mêmes applications (par exemple un verre renforcé ou non), en particulier résistant à haute température et/ou présentant notamment un coefficient de dilatation nul ou quasi-nul (par exemple inférieur à $15.10^{-7}$ K$^{-1}$, comme dans le cas des plaques vitrocéramiques utilisées avec des feux radiants). De préférence cependant, il s'agit d'un article en vitrocéramique proprement dite.

De préférence, l'article selon l'invention est formé (comme substrat) d'une plaque vitrocéramique (d'épaisseur généralement comprise entre 3 et 4 mm, notamment de l'ordre de 4 mm), plane, ou majoritairement ou quasiment plane (en particulier avec une flèche inférieure à 0,1% de la diagonale de la plaque, et de préférence de l'ordre de zéro), et est destiné à servir de plaque de cuisson. Une telle plaque est généralement destinée à être intégrée dans une table de cuisson ou cuisinière comprenant ladite plaque et des éléments chauffants, par exemple des foyers radiants ou halogènes ou des éléments de chauffage par induction.

La plaque présente généralement une face "supérieure" (face visible) en position d'utilisation, une autre face "inférieure" (souvent cachée, dans le châssis ou caisson d'une cuisinière par exemple) en position d'utilisation, et une tranche (ou chant ou épaisseur). La face supérieure est généralement plane et lisse mais peut aussi présenter au moins une zone en relief et/ou au moins une zone en creux et/ou au moins une ouverture (par exemple si la plaque incorpore une ouverture destinée à recevoir un brûleur à gaz atmosphérique). La face inférieure peut être notamment lisse ou munie de picots augmentant sa résistance mécanique et obtenus par exemple par laminage. Le cas échéant, dans le cas de picots, une résine d'indice peut être appliquée sur la surface inférieure afin de la lisser, si nécessaire.

L'article selon l'invention est avantageusement à base de toute vitrocéramique ayant, de manière intrinsèque, une transmission lumineuse allant de 0,8% à 40% (en particulier de 2,3 à 40%) et une transmission optique (déterminée de façon connue en faisant le rapport entre l'intensité transmise et l'intensité incidente à une longueur d'onde donnée) d'au moins 0,1% pour au moins une longueur d'onde, comprise dans le domaine du visible, au dessus de 420 nm (et jusqu'à 780 nm), et de préférence d'au moins 0.1% pour toutes les longueurs d'onde comprises dans le domaine allant de 420 à 780 nm. Par « de manière intrinsèque», on entend que la plaque possède une telle transmission en elle-même, sans la présence d'un quelconque revêtement. La transmission lumineuse ($T_L$) est mesurée selon la norme ISO 9050 :2003 (mentionnant également la transmission optique) en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4 mm selon la norme ISO 9050 :2003. L'invention s'applique de façon particulièrement avantageuse aux plaques sombres, notamment d'aspect noir ou brun, présentant de tels critères de transmission, mais la vitrocéramique utilisée présentant de tels critères peut également être une vitrocéramique claire, la solution selon l'invention permettant d'obtenir l'affichage lumineux de la couleur précise désirée, avec une grande souplesse d'adaptation, pour toute cette gamme de plaques, de façon simple et sans risquer d'altérer d'autres propriétés des plaques.

Dans un premier mode de réalisation, la vitrocéramique est une vitrocéramique, en particulier sombre (notamment telle que la valeur de L* dans le système colorimétrique CIE, calculée à partir du spectre de transmission de ladite vitrocéramique sur le domaine du visible, soit inférieure à 70%), présentant une transmission lumineuse dans le visible de 0,8% à 5%, en particulier de 0,8 à 2,5%, et présentant une transmission optique supérieure à 0,1% pour au moins une longueur d'onde dans le domaine du visible supérieure à 450 nm.

Dans un autre mode de réalisation avantageux, la vitrocéramique, du type aluminosilicate de lithium, présente (de manière intrinsèque) une transmission lumineuse allant de 2,3% à 40%, en particulier supérieure à 2.5%, notamment supérieure à 3.5%, et une transmission optique d'au moins 0,6% pour au moins une longueur d'onde comprise dans le domaine allant de 420 à 480 nm. Dans ce cas, que la vitrocéramique soit claire ou sombre, elle présente de préférence au moins un moyen de masquage destiné à masquer au moins une partie des éléments sous-jacents associés (moyens de chauffage notamment) le cas échéant à l'exclusion des dispositifs émetteurs de lumière/des zones d'éclairage et le cas échéant de moyens de chauffage par rayonnement, le(s) filtre(s) étant dans ce cas essentiellement utilisé(s) dans les zones lumineuses non masquées.

En particulier, on utilise avantageusement une vitrocéramique comprenant les constituants suivants et/ou obtenue par céramisation à partir d'un verre de composition suivante, dans les limites ci-après exprimées en pourcentages pondéraux : $SiO_2$: 52 - 75 %; $Al_2O_3$ :18 - 27 %; $Li_2O$: 2,5 - 5,5 %; $K_2O$ : 0 - 3 %; $Na_2O$ : 0 - 3 %; :ZnO : 0 - 3,5 %; MgO : 0 - 3 %; CaO: 0 - 2,5%; BaO : 0 - 3,5 %; SrO : 0 - 2 %; $TiO_2$ :1,2 - 5,5 %; $ZrO_2$ : 0 - 3 %; $P_2O_5$: 0 - 8 %, et de préférence, dans les limites ci-après exprimées en pourcentages pondéraux : $SiO_2$ :64 - 70 %; $Al_2O_3$ : 18 - 21 %; $Li_2O$ : 2,5 - 3,9 %; $K_2O$ : 0 - 1,0 %; $Na_2O$ : 0-1,0 %; ZnO : 1,2 - 2,8 %; MgO : 0,20 - 1,5 %; CaO : 0 - 1 %; BaO: 0 - 3 %; SrO: 0 - 1,4 %; $TiO_2$: 1,8 - 3,2 %; $ZrO_2$: 1,0 - 2,5 %.

La vitrocéramique peut aussi comprendre jusqu'à 1 % en poids de constituants non essentiels n'affectant pas la fusion du verre-mère ou la dévitrification ultérieure conduisant à la vitrocéramique. Des colorants peuvent notamment être ajoutés à la composition dans le cas par exemple des vitrocéramiques noires ou brunes. Par exemple, la composition de la plaque peut comprendre avantageusement de l'oxyde de vanadium à un taux compris entre 0,01% et 0,2%, de préférence inférieur ou égal à 0,05%, voire à 0,04%. Les teneurs préférées en oxyde de vanadium sont comprises entre 0,01 et 0,03%.

La vitrocéramique peut aussi contenir, pour cacher les éléments chauffants et éventuellement en combinaison avec l'oxyde de vanadium, les autres agents colorants suivants (limites pondérales) : $Fe_2O_3$ : 0 - 0,2 %; CoO : 0-1 %, et de préférence 0 - 0,12%, voire du NiO, du CuO et/ou du MnO. La vitrocéramique peut aussi comprendre de l'oxyde d'étain (ou d'autres réducteurs comme les sulfures métalliques) à un taux inférieur à 0,5%, l'oxyde d'étain permettant de favoriser la réduction du vanadium pendant l'étape de céramisation, entraînant notamment l'apparition de la couleur.

La vitrocéramique sombre préférée selon l'invention comprend généralement des cristaux de structure β-quartz au sein d'une phase vitreuse résiduelle, et la valeur absolue de son coefficient de dilatation est avantageusement inférieure ou égale à $15.10^{-7}$/°C, voire à $5.10^{-7}$/°C.

Comme défini précédemment, l'article selon l'invention comprend également au moins une source lumineuse, pouvant être continue ou discontinue, et le cas échéant comprend plusieurs sources (leur nombre et leur disposition pouvant varier pour homogénéiser l'éclairage). La ou les sources peuvent être intégrées dans/couplées à une ou des structure(s) de type afficheur(s) (par exemple à diodes électroluminescentes dits « à 7 segments » ou à cristaux liquides), à un bandeau de commande électronique à touches sensitives et affichage digital, etc. Les sources lumineuses sont de préférence formées par des diodes électroluminescentes (ou DEL ou LED en anglais), plus ou moins espacées, éventuellement associées à un ou plusieurs guides optiques comme mentionné ultérieurement. Les diodes sont avantageuses dans la présente invention en terme notamment d'encombrement, d'efficacité, de pérennité et de résistance aux conditions environnantes (chaleur...).

Les diodes peuvent être encapsulées, c'est-à-dire comprendre un composant semi-conducteur et une enveloppe (par exemple en résine type époxy ou nylon), encapsulant le composant semi-conducteur. Les diodes peuvent aussi être des puces semi-conductrices sans lentilles de collimation par exemple de taille de l'ordre de la centaine de μm ou du mm, éventuellement avec une encapsulation minime (par exemple de protection).

Les diodes peuvent être portées par un support ou barrette ou embase, cette embase pouvant présenter une surface (plane ou inclinée) traitée et/ou rendue réfléchissante pour une meilleure efficacité lumineuse, par exemple revêtue d'une laque ou peinture et/ou couche miroir, et/ou couplée à un réflecteur blanc ou métallique pour mieux diriger le rayonnement émis.

L'assemblage de la ou des sources (à la plaque ou à un autre constituant de l'article comme par exemple le bandeau de commande) peut se faire par soudure, clipsage, collage, etc, le cas échéant par l'intermédiaire d'un autre élément ; par exemple, on peut monter des diodes, soudées sur un support lui même logé au fond d'un profilé métallique, par clipsage ou collage du profilé. Le positionnement de la ou des sources (par rapport à la plaque notamment) est adapté pour permettre un affichage au travers de la vitrocéramique.

Les sources, ainsi que leur alimentation et actionnement, peuvent être dissociés ou non de façon à permettre un éclairage simultané ou séparé des zones d'éclairage voulues selon les besoins. Chaque source peut être monochromatique (couleur pure), dans le cas notamment où plusieurs sources monochromatiques sont combinées (par exemple LED RGB) pour émettre un spectre polychromatique (couleur de synthèse), ou peut être polychromatique. L'invention permet avantageusement de corriger l'absorption inhomogène du spectre polychromatique de la ou des sources à travers la vitrocéramique (par exemple pour une LED blanche), et s'applique particulièrement aux articles utilisant des sources à émissions polychromatiques (seules ou en combinaison).

Par « source lumineuse monochromatique » on entend une source lumineuse présentant un seul pic d'émission dans la gamme des longueurs d'onde visibles et tel que la largeur du pic varie de 1 à 100 nm, préférentiellement de 5 à 50 nm.

Par « source lumineuse polychromatique » on entend une source lumineuse qui présente au moins deux pics d'émission à des longueurs d'onde différentes dans la gamme des longueurs d'onde visibles. La couleur perçue (visuellement par l'utilisateur) est alors issue d'un mélange entre les différentes longueurs d'ondes. Il peut s'agir d'une LED, et/ou d'un afficheur à LED(s), avec un spectre d'émission présentant un pic d'émission principal et un autre pic d'émission, par exemple de fluorescence, plus large que le pic principal, et généralement de plus faible intensité. La LED polychromatique émet en particulier selon une première émission (de forte ou de faible intensité) comprise entre 400 et 500 nm et selon une deuxième émission dans le visible au-delà de 500 nm (de forte ou de faible intensité) (cas par exemple de LEDs formées d'au moins un cristal électroluminescent et de phosphore(s) photoluminescent(s)).

On peut notamment utiliser comme sources des LEDs blanches fabriquées par exemple à partir d'une puce de cristal semi-conducteur tel que le nitrure de gallium/indium (InGaN) émettant dans le bleu recouverte d'une résine transparente (telle que silicone ou époxy) contenant des luminophores minéraux (par exemple YAG:Ce), absorbant le bleu et émettant dans le jaune. Comme autres exemples de LEDs polychromatiques avantageuses, on peut citer notamment les LEDs ou afficheurs suivants : la gamme XLamp® LED ou « High Brightness LED » de la société CREE, la gamme Nichia-Helios, NichiaRigel, « Lamp type LED », NSSM, NSSW, NSEW, NS9 et NS2 de la société Nichia, la série des « TOPLEDO » blanches et les références LW Q38E, LW L283 et LW Q38G de la société OSRAM, la gamme « Luxeon® Rebel White » et « Luxeon® K2 » de la société Philips Lumileds, les LEDs de références E1S19, E1S27, E1S62, E1S66, E1S67, E1SAG, E1SAP, EASAA, EASAU, EASAV, E1L4x et E1L5x de la société Toyoda Gosei, les LEDS de références HSMW-C120, HSMW-C130, HSMW-C191, HSMW-C197 et HSMW-C265 de la société Avago Technologie, les LEDs de références LTW-C193TS5 et LTW-C191TS5 de la société LITE-ON, les LEDs de références WH104L-H, WH104-NZ et WH107 de la société Seoul Semiconductor, la LED de référence 19-213/T1D-KS1T1B2/3T de la société Everlight, etc.

On peut également citer les afficheurs à LED(s) suivants : afficheurs 7 segments blancs de références HDSM-431W et HDSM-433W de la société Avago Technologies, ou de références FN1-0391W010JBW et FN1-0391W050JBW de la société FORGE EUROPA, afficheurs matriciels « Dot Matrix® » de la société KingBright Ex. : Réf. TA20-11YWA; afficheurs à barres « Bar Graph Array® » de la société KingBright, par exemple de référence DC10YWA. A noter que les afficheurs à LED(s) sont des dispositifs d'affichage lumineux dont la source lumineuse « primaire » est constituée de LED(s), ces dispositifs étant généralement composés de « segments » lumineux (par exemple afficheurs à 7 segments), de points (afficheurs matriciels) ou de barres, un segment étant généralement formé par un réflecteur, la ou les LEDs étant généralement insérée(s) à une extrémité du réflecteur et la lumière guidée jusqu'à l'autre l'extrémité (apparente), les parois internes du réflecteur pouvant être diffusantes et/ou l'extrémité apparente du segment pouvant être recouverte d'un matériau plastique de transparence élevée.

Comme déjà évoqué, l'article peut comprendre, outre la ou les sources, au moins un guide d'onde destiné à propager la lumière d'une partie à l'autre de l'article (en particulier par réflexion totale interne ou par réflexion métallique), la source lumineuse étant alors rattachée au guide et coopérant avec celui-ci en émettant en son sein son rayonnement lumineux afin que le guide le transmette, la ou les sources lumineuses émettant/étant couplées par exemple par la tranche ou chant du guide. Ce guide est avantageusement clair ou transparent (c'est-à-dire, dans le cas du guide, présentant une transmission lumineuse $T_L$ d'au moins 30%), et est généralement rapporté (assemblé après avoir été conçu séparément) sur la face inférieure du substrat. Il peut être organique et/ou plastique (par exemple en polycarbonate ou polyméthacrylate de méthyle PMMA), ou minéral, et est de préférence minéral ; en particulier, il s'agit d'un verre. L'article selon l'invention peut comprendre plusieurs guides dédiés chacun à une ou plusieurs zones d'éclairage, ou un guide unitaire, pourvu le cas échéant d'ouvertures. Le guide peut être solidarisé au substrat par collage et/ou clipsage, ou par encapsulation, etc. L'assemblage du guide peut se faire directement sur le substrat ou sur une autre partie de l'article ou d'un support sur lequel est monté l'article, par exemple dans le cas d'un module ou appareil de cuisson, le guide peut être solidarisé au caisson de l'appareil de cuisson sur lequel le substrat est monté (le caisson pouvant le cas échéant faire partie de l'article). Le guide permet, entre autres, de mieux conduire la lumière jusqu'aux zones d'éclairage voulues, en particulier lorsque le substrat est de couleur sombre.

L'article selon l'invention peut aussi comprendre dans la zone d'éclairage, au moins un moyen d'extraction du rayonnement émis par la ou les sources, par exemple un ou des éléments ou traitement(s) diffusants, en particulier un moyen d'extraction tel qu'une couche rapportée sur la surface et/ou par tout traitement ou texturation différentielle de la surface (local ou sur toute la surface), le cas échéant du guide d'onde, comme la gravure laser, l'impression d'émail, l'attaque chimique (acide..) ou mécanique (sablage...), etc. Une surface d'extraction peut également être prévue, par exemple dans l'épaisseur du guide le cas échéant, suivant par exemple une technologie de gravure interne par laser. Le ou les moyens d'extraction permettent d'extraire les rayonnements du guide vers la zone d'éclairage voulue. Le cas échéant, la géométrie et la rugosité du bord d'un guide d'onde peuvent également être travaillées pour permettre une extraction locale et contrôlée de la lumière. Le ou les moyens d'extraction peuvent être combinés le cas échéant avec un autre traitement permettant de cibler les zones d'éclairage, par exemple avec une sérigraphie occultante (masquant certaines zones et empêchant le passage de la lumière) sur le substrat.

Comme défini selon l'invention, l'article revendiqué comprend également au moins un filtre jet d'encre, ce filtre étant généralement placé (et occupant en particulier une position fixe) entre la source et le substrat et pouvant être solidarisé (c'est-à-dire directement, ou indirectement (par exemple par l'intermédiaire d'un autre constituant) fixé, et inamovible de façon simple une fois placé) à la source et/ou au substrat, et/ou éventuellement à un autre élément intermédiaire (par exemple un moyen d'extraction de la lumière tel que précité), avantageusement transparent (c'est-à-dire, dans le cas de l'élément intermédiaire, présentant une transmission lumineuse $T_L$ d'au moins 30%), comme explicité ultérieurement. De préférence, il est solidaire de (ou fixé sur) la vitrocéramique.

Le filtre est formé par dépôt (ou déposé sous forme) d'au moins une couche d'encre par jet d'encre à l'endroit choisi sur le substrat et/ou sur la source et/ou sur un élément intermédiaire entre le substrat et la source concernés. La technique jet d'encre permet (avantageusement sous contrôle d'ordinateur) un dépôt direct, sans contact, et avec seulement la quantité d'encre nécessaire, sur les différents types de supports de l'article selon l'invention, même fragiles (autre couche). L'encre liquide pulsée à travers un ou des orifices capillaires, se sépare en gouttelettes, chaque microgoutte étant le cas échéant projetée et/ou déviée, électriquement ou magnétiquement, au cours de sa projection vers le support d'impression. L'image imprimée est ainsi formée d'une infinité de petites taches d'encres juxtaposées. L'impression peut se faire en continu ou en jet à la demande, l'épaisseur de la couche finale (formée par les gouttes), correspondant au filtre jet d'encre obtenu, étant comprise entre 1 $\mu$m et 50 $\mu$m selon l'invention pour permettre l'effet (filtre) recherché tout en étant compatible avec le procédé de fabrication de l'article selon l'invention, notamment autorisant un dépôt et séchage efficaces et rapides, l'épaisseur du filtre jet d'encre obtenu étant supérieure à 5 μm et inférieure à 30 μm, et étant par exemple de l'ordre de 10 à 20 μm.

La composition du filtre est déterminée de façon à ce que celui-ci agisse sur ou compense de façon choisie, maitrisée et reproductible la transmission lumineuse au travers de la plaque (le filtre présente à cet effet une dispersion spectrale différente de celle de la vitrocéramique). Conformément à l'invention, le filtre est à base d'encre(s), plusieurs encres de couleurs primaires étant avantageusement superposées pour former la couche constituant le filtre. Les encres peuvent notamment être choisies dans différentes sortes d'encres courantes (encres pigmentaires ou à base de colorants solubles, encres à base d'eau ou solvants, encres hot-melt, encres photopolymérisables (ou encres UV), etc.) Pour éviter le bouchage des buses lors de l'impression du filtre, les encres sont généralement des encres polymères (ou à base de polymère(s), ce(s) polymère(s) formant en particulier le médium mentionné ci-après), les formulations d'encres pouvant néanmoins inclure (simultanément, par exemple en tant que colorants, ou éventuellement alternativement) d'autres types de composants (métalliques, céramiques, etc.), en particulier sous forme de nanoparticuies, etc. La composition d'une encre utilisable pour obtenir le filtre selon l'invention comprend généralement des colorants ou des pigments (par exemple de 1 à 10 %, en particulier de 1 à 5%, du poids de l'encre), un ou plusieurs médiums et/ou un ou des solvants (par exemple de 35 à 90 % en poids de l'encre) et le cas échéant un ou plusieurs additifs (tels que plastifiant(s), agents(s) mouillant(s), tensioactif(s), ajusteur(s) de pH ou de viscosité, agents ralentissant l'évaporation, conducteurs, biocide(s), antimousse(s), anti-oxydant(s), etc, à des taux n'excédant pas généralement 15% en poids). Les pigments peuvent être minéraux ou organiques, les colorants et/ou pigments étant notamment dissous ou dispersés dans le solvant et/ou le médium de l'encre, le médium étant par exemple une résine de type silicone, époxy, polyamide, ou acrylique, un médium à séchage UV, ou une matrice minérale de type sol-gel, le solvant pouvant être à base d'alcool, de méthy-éthyl-cétone, d'acétate d'éthyle, d'eau, etc. De préférence, la ou les encres utilisées sont à base acrylique (ou formée(s) d'un médium acrylique), par exemple sont à base d'acrylate(s), de diacrylate(s), etc.. En particulier ce sont des encres à colorants solubles (ou dissous).

A noter que les substances colorées, en particulier colorants ou pigments, utilisées pour réaliser les filtres précités résistent de préférence à la chaleur. Par exemple on peut utiliser avantageusement des pigments de noir de carbone, phtalocyanine, lithol rubine, dierylide, etc, utilisés notamment en mélange et dispersés par exemple dans une résine de type styrène acrylique ou phénolique. Comme indiqué précédemment, les encres utilisées sont en particulier des encres acryliques (ou à médium acrylique) à séchage UV, stables en température et à la lumière, comme par exemple les encres de référence Anapurna M commercialisées par la société Agfa.

Avantageusement, la taille des particules présentes le cas échéant dans la ou les encres utilisées pour obtenir les filtres selon l'invention est inférieure à 1 μm, et la viscosité au dépôt de la ou desdites encres est comprise entre 5 et 15 mPa.s. Avantageusement également, la tension superficielle/tension de surface de la ou des encres est comprise entre 15 et 50 mN/m.

Le filtre jet d'encre est généralement un filtre par absorption (cette absorption étant en particulier contrôlée par les composés de type colorants ou pigments) permettant avantageusement d'obtenir l'effet ou la couleur choisi(e) quel que soit l'angle d'incidence de l'observation.

Le filtre jet d'encre utilisé selon l'invention présente une transmission lumineuse d'au moins 5%, notamment d'au moins 20%, et en particulier d'au moins 30%.

Comme indiqué précédemment, le filtre est réalisé par impression jet d'encre, en particulier sur le substrat vitrocéramique et/ou la source et/ou un élément intermédiaire, et est de préférence solidaire du substrat vitrocéramique.

Le cas échéant, l'adhésion de l'encre à son support, notamment lorsque le support est un matériau verrier (substrat vitrocéramique ou source notamment) est renforcée par un traitement préalable (en particulier du support) et/ou l'ajout d'un composant ou additif ou composition approprié(e) (par exemple dans la composition de l'encre et/ou en surface du support). En particulier et de préférence, le support (ou partie de l'article devant recevoir l'encre/sur laquelle l'encre est appliquée) est traité préalablement au dépôt de l'encre par le dépôt d'un promoteur d'adhésion (ou couche d'accrochage ou primaire) chimique et/ou par un traitement (ou préparation) de surface non chimique, notamment de type plasma.

Dans un premier mode de réalisation, la surface du support est préalablement préparée/traitée par traitement plasma (traitement corona ou préférentiellement plasma atmosphérique).

Dans un second mode, préféré, de réalisation de l'invention, l'adhésion de l'encre à son support est renforcée par le dépôt préalable entre l'encre et son support d'au moins une couche d'accrochage, en particulier une couche d'un primaire approprié, et notamment une couche à base de silane(s) et/ou de (poly)siloxane(s), comme précisé ci-après. Il est également possible de combiner le traitement de préparation de surface de type plasma et le dépôt du promoteur d'adhésion (par exemple d'appliquer un ou des silanes par plasma).

Comme indiqué précédemment et préférentiellement, au moins une couche d'accrochage ou couche d'un primaire d'adhésion est présente entre le filtre jet d'encre et le support ou la partie de l'article sur lequel/laquelle le filtre est appliqué. Ce primaire peut être appliqué notamment par chiffonnage (trempe d'un tissu dans le primaire et passage du tissu sur le support, avec retrait éventuel de l'excès (notamment par nouveau chiffonnage avec un tissu imprégné par exemple du même solvant que celui du primaire), laissant une pellicule du primaire), enduction au rouleau ou par pulvérisation (spray), enduction par centrifugation (spin coating), rideau, sérigraphie, ou jet d'encre, voire traitement plasma, etc, l'enduction se faisant généralement de façon simple et efficace par chiffonnage (ou technique de wipe on/wipe off avec retrait d'excès), et se faisant en particulier de façon à laisser une couche de type mono-moléculaire (épaisseur de l'ordre d'une ou quelques molécules) de primaire sur le support (l'excès étant le cas échéant retiré).

Le primaire est notamment et avantageusement formé d'un ou de composés à base de silanes (notamment d'un mélange de silanes), en particulier fonctionnalisé(s), tel(s) qu'un ou des amino-silanes et/ou un ou des silanes méthacrylates (par exemple du 3-(triméthoxysilyl)propyl méthacrylate) et/ou un ou des époxy silanes, généralement mis en solution (notamment aqueuse ou dans un solvant tel que l'isopropanol par exemple) avant application. Le primaire peut ainsi se présenter sous forme d'une solution de silane(s) pur(s). Le cas échéant, le primaire (notamment la solution aqueuse de silanes) peut aussi comprendre d'autres composés, notamment être stabilisé par l'ajout d'autres composés (tels que des composés organométalliques dans le cas des amino-silanes). Le primaire peut également ou alternativement être formé d'un ou de composés à base de (poly)siloxanes, en particulier fonctionnalisé(s),

L'épaisseur du filtre (ou de la ou des couches formant le filtre) appliqué sur au moins une partie de l'article selon l'invention (directement ou indirectement en appliquant préalablement un primaire comme indiqué précédemment), est comprise entre 5 et 50 μm comme indiqué selon l'invention, l'épaisseur du primaire éventuel étant généralement de l'ordre de 1 ou quelques angströms (en particulier couche mono-moléculaire comme précité).

Après dépôt de la ou des encres formant le filtre selon l'invention, la solidification de la ou des couches d'encre peut être opérée de différentes façons selon la composition des encres utilisées, par exemple : à température ambiante ou par séchage et/ou chauffage (thermique, par rayonnement infrarouge (IR)) ou par ultra-violet (UV), etc, les grandes vitesses d'impression et la nature du support imposant souvent un séchage forcé), cette solidification s'opérant notamment par évaporation des solvants, par polymérisation d'un des constituants du fluide, par oxydation (par l'oxygène de l'air notamment), par absorption ou pénétration dans le support d'impression (souvent activée par la chaleur), par fusion. etc., De préférence, cette solidification est opérée par polymérisation d'au moins un des constituants de l'encre par exemple sous l'effet d'un rayonnement ultra-violet.

Le choix du filtre spécifiquement approprié à chaque cas, pour obtenir la couleur cible recherchée (telle que perçue visuellement) et/ou l'effet compensateur recherché (cas par exemple de la recherche d'une transmission neutre au travers de l'article sans altération de la couleur de la source, quelle que soit la source), est notamment fonction de la plaque vitrocéramique utilisée, de la couleur recherchée (et de la source utilisée dans ce cas là) ou de l'effet voulu (cas de la transmission neutre quelle que soit la source), et du filtre utilisé.

Dans un premier mode de réalisation, si l'on souhaite compenser parfaitement la transmission de la vitrocéramique afin que l'ensemble vitrocéramique/filtre n'altère pas la couleur de la source (transmission neutre, constante ou approximativement constante, par exemple à une variation de 0.5 % près, sur le domaine de transmission considéré), le filtre recherché dépend en premier lieu de la vitrocéramique et doit fonctionner quelle que soit la source lumineuse utilisée. Il est alors qualifié d'universel et est capable de corriger la dispersion colorimétrique introduite par une vitrocéramique (en particulier sous forme de plaque dans la présente invention) de composition et d'épaisseur données. Le filtre universel est sélectionné de façon à ce que la transmission optique (intensité lumineuse transmise sur intensité lumineuse incidente/émise par la source) $T_T$ (λ) (pour chaque longueur d'onde λ considérée, ladite transmission étant mesurée en incidence normale, ou à un angle d'incidence plus approprié en fonction des conditions d'utilisation choisies) totale au travers de l'ensemble filtre + vitrocéramique soit (égale à une) constante dans tout le domaine spectral considéré (ou pour toute(s) longueur(s) d'onde considérée(s)). Pour se faire, on détermine le minimum de transmission (optique) $T_{Vmin}$ de ladite vitrocéramique dans le domaine spectral considéré, et on cherche un filtre (plus précisément la composition du filtre, c'est-à-dire les quantités relatives des encres, par exemple cyan, magenta, jaune et noir, appropriées pour obtenir ledit filtre) permettant d'obtenir une valeur de $T_T(λ)$ constante égale à $T_{Vmin}$ quelle que soit la longueur d'onde du domaine spectral considéré, à une différence $T_T(λ) - T_{Vmin}$ près n'excédant pas de préférence 0,1, et de façon particulièrement préférée 0,01 (en d'autres termes, on minimise $T_T(λ) - T_{Vmin}$).

Généralement, le domaine spectral considéré est le domaine spectral du visible (toutes longueurs d'onde comprise entre 380 nm et 780 nm, notamment entre 420 et 780 nm). Le filtre universel choisi permet de conserver la couleur de la source, quelle que soit cette source (la transmission $T_T(λ)$ est la même pour toutes les longueurs d'onde du visible), seule l'intensité étant altérée (intensité obtenue pour $T_{Vmin}$). Alternativement le domaine spectral peut être beaucoup plus réduit (par exemple entre 420 et 600 nm), autorisant une certaine dispersion colorimétrique (ou écart entre la couleur perçue et la couleur de la source), mais maximisant le flux visuel final perçu, en particulier on peut choisir de limiter au domaine spectral où l'œil humain est le plus sensible au rayonnement électromagnétique reçu. Par exemple, dans la mesure où l'efficacité lumineuse spectrale V(λ)

(définie par la Commission Internationale de l'Eclairage), permettant d'exprimer le flux lumineux perçu par l'œil humain, atteint sa valeur maximum 1 pour une longueur d'onde de 555 nm, la valeur de $T_{Vmin}$ considérée peut être celle mesurée à 555 nm environ, ou bien, à titre d'autre exemple, dans la mesure où V(À) est supérieur à 0,5 de 510 nm à 610 nm (en vision photopique, c'est-à-dire vision de jour), la valeur de $T_{Vmin}$ considérée peut être celle sur le domaine spectral compris entre 510 nm et 610 nm.

A partir de $T_{Vmin}$, on peut donc déduire la transmission $T_F(\lambda)$ du filtre recherché, $T_T(\lambda)$ dépendant de la transmission du filtre $T_F(\lambda)$ et de celle de la vitrocéramique $T_V(\lambda)$ dans des rapports fonctions notamment de la composition du filtre et de son épaisseur (dans le cas le plus simple, en négligeant notamment les réflexions aux interfaces, on a, en première approximation $T_T(\lambda)= T_F(\lambda) \times T_V(\lambda)$). Le filtre est ensuite réalisé, par exemple de façon empirique par essais successifs pour arriver au (spectre de transmission) $T_F(\lambda)$ voulu (c'est-à-dire qui minimise $T_T(\lambda)- T_{Vmin}$, par exemple de sorte que $|T_T(\lambda)- T_{Vmin}| \leq 0,1$), ou par optimisation numérique/algorithme, etc, les variables (du filtre) intervenant sur la transmission (par exemple concentration de pigments, type de pigments, épaisseur du filtre, etc.), ces variables dépendant du filtre étant ajustées lors de cette optimisation.

Dans un autre mode de réalisation ou une variante, lorsque la source lumineuse est fixée (le filtre étant alors fonction le cas échéant de la vitrocéramique et de la source) et que l'on cherche à retrouver la couleur initiale de la source, ou une couleur proche, après transmission au travers de l'ensemble vitrocéramique/filtre, le domaine spectral considéré (dans lequel on détermine en particulier $T_{Vmin}$) est le domaine d'émission de la source. Alternativement, de la même façon que précédemment, on peut autoriser une certaine dispersion colorimétrique de façon à maximiser le flux visuel final perçu, en choisissant par exemple le ou les (intervalles de) longueurs d'onde dans le domaine d'émission de la source telles que le produit $F_e(\lambda) \times V(\lambda)$, normalisé à 1 (c'est-à-dire que pour chaque longueur d'onde, on divise $F_e(\lambda) \times V(\lambda)$ par la valeur maximale de $F_e(\lambda) \times V(\lambda)$ sur le domaine d'émission de la source, toutes les valeurs de $F_e(\lambda) \times V(\lambda)$ normalisé à 1 étant alors comprises entre 0 et 1), où $F_e(\lambda)$ désigne pour une bande de longueur d'onde donnée la densité spectrale de flux énergétique de la source, est supérieur à 0,1.

Dans un troisième mode de réalisation, lorsque la source lumineuse est fixée, le filtre peut être déterminé de façon à obtenir une couleur cible différente de la couleur initiale de la source après transmission au travers de l'ensemble vitrocéramique/filtre. Dans ce cas, on ne se base pas sur la valeur de $T_{Vmin}$ utilisée précédemment, mais, à la place, on détermine, selon le modèle CIE 1931, les coordonnées colorimétriques $(x_c,y_c)$ de la couleur cible souhaitée et on cherche un filtre permettant d'obtenir des coordonnées colorimétriques (x,y) associées au flux énergétique $T_T(\lambda) \times F_e(\lambda)$ émis par l'ensemble source/filtre/vitrocéramique telles que la valeur d = $((x- x_c)^2 +(y - y_c)^2)^{1/2}$ soit minimisée, en particulier inférieure ou égal à 0,05, préférentiellement à 0,01 et encore plus préférentiellement à 0,005. Le cas échéant, plusieurs filtres pouvant être identifiés dû au phénomène de métamérisme (sensation visuelle de couleur identique sous un même éclairage), on peut affiner encore la sélection en choisissant notamment la solution/le filtre qui donne le flux lumineux final le plus grand (par exemple maximisant K x $\int T_T(\lambda) \times F_e(\lambda) \times V(\lambda) d\lambda$ pour des valeurs de A entre 380 et 780 nm, K étant une constante égale à 683 lm/W en vision photopique (flux lumineux perçu par l'œil pour une source lumineuse de 1 W émettant à 555 nm).

A partir des coordonnées colorimétriques (x, y) ainsi déterminées, on peut déduire là encore la transmission $T_F(\lambda)$ du filtre recherché, les formules de calcul étant encore une fois fonction notamment de la composition du filtre et de son épaisseur, le choix se faisant comme précédemment de façon empirique par essais successifs pour arriver au critère/spectre de transmission $T_F(\lambda)$ voulu (c'est-à-dire qui minimise la valeur d), ou par optimisation numérique/algorithme, etc, les variables (du filtre) intervenant sur la transmission, ces variables dépendant du filtre choisi, étant ajustées lors de cette optimisation.

Des exemples de filtres sont donnés ultérieurement. Dans le cas du filtre jet d'encre selon l'invention formé par dépôt d'un mélange de pigments ou colorants dispersés dans un médium, et si l'on dispose de N espèces absorbantes (pigments et/ou colorants par exemple, et éventuellement le médium dans le cas notamment où celui-ci absorbe la lumière de façon non négligeable) que l'on mélange puis qu'on applique sous la plaque vitrocéramique, on peut identifier la composition optimale de ce mélange coloré en fonction du but recherché (transmission neutre, couleur conservée ou différente de la couleur initiale de la source), à partir de la loi de Beer-Lambert (toujours valable dans notre cas) permettant de prévoir l'absorbance $A$ du mélange de $N$ espèces absorbantes :

$$A(\lambda) = \sum_{i=1}^{N} \varepsilon_i(\lambda) l C_i$$

où $\varepsilon_i$ est l'absorptivité molaire de chaque espèce, $l$ la longueur du trajet optique dans le mélange, et $C_i$ la concentration molaire de chaque espèce. On modélise alors $T_T(\lambda, C_1,...,C_N)$, transmission de l'ensemble {mélange de composition variable + vitrocéramique}. Suivant le mode choisi (réalisation d'un filtre universel, ou réalisation d'un filtre pour une vitrocéramique et une source données, avec une couleur cible identique ou non à celle de la source), on peut alors chercher à optimiser $(C_1,...,C_N)$ de façon à ce que $|T_T(\lambda)- T_{Vmin}| \leq 0,1$, ou calculer les coordonnées colorimétriques $(x(C_1,...,C_N),y(C_1,...,C_N))$ associées au flux $T_T(\lambda, C_1,...,CN)F_e(\lambda)$ transmis puis optimiser $(C_1,...,C_N)$ de façon à ce que d = $((x- x_c)^2 +(y -$

$y_c)^2)^{1/2} \leq 0,05$, et de préférence $\leq 0.01$, comme explicité précédemment.

L'invention concerne également un procédé de sélection (et/ou réglage) d'au moins un filtre jet d'encre pour la réalisation de (plaque(s)) vitrocéramique(s) présentant au moins une zone lumineuse, en particulier une zone d'affichage, colorée tel qu'explicité ci-avant en fonction du but recherché.

Comme déjà évoqué, chaque filtre jet d'encre est positionné (couplé) par rapport au substrat et à la source correspondante de façon à corriger la transmission lumineuse au travers de la vitrocéramique et est généralement positionné (dans les zones d'éclairage) sur la face inférieure de la vitrocéramique. On peut élaborer chaque filtre selon chaque cas d'espèce en fonction du but recherché, comme évoqué dans les méthodes de sélection précédentes.

La combinaison source/filtre jet d'encre/vitrocéramique permet d'obtenir un affichage blanc ou coloré au travers de la vitrocéramique, ce qui donne accès à des effets lumineux particulièrement recherchés en termes de design. L'article selon l'invention peut ainsi présenter une ou plusieurs zones lumineuses/d'affichage à usage fonctionnel et/ou décoratif (dessin, logo, signalisation alphanumérique, etc), généralement observées en faces principales (notamment la face supérieure) du substrat vitrocéramique. La ou lesdites zones peuvent être dans toute zone du substrat vitrocéramique (y compris zones de chauffe), et l'on peut avoir plusieurs zones lumineuses/d'affichage différenciées (couleur, niveau de luminance), et/ou chaque zone peut elle même présenter différentes couleurs, par exemple une zone peut être bicolore.

L'article selon l'invention peut comporter le cas échéant d'autres éléments et/ou couches que les constituants précités. Par exemple, lorsqu'il s'agit d'un module de cuisson, l'article peut être muni de (ou associée avec des) élément(s) fonctionnel(s) ou de décor supplémentaire(s) (cadre, connecteur(s), câble(s), élément(s) de commande), etc. Il peut comporter divers revêtements fonctionnels et/ou décoratifs, à base d'émail, de peinture, etc. Par exemple, l'une des faces du substrat peut comporter une couche d'émail de décoration, de masquage (pour éviter par exemple la vision directe des sources), ou d'autre fonction (homogénéisation de l'éclairage, etc.).

L'invention concerne aussi les appareils (ou dispositifs) de cuisson et/ou de maintien à haute température comportant au moins un article selon l'invention (par exemple cuisinières, tables de cuisson encastrables, fours, etc) et comportant, le cas échéant, un ou plusieurs éléments chauffants tels qu'un ou plusieurs éléments radiants ou halogènes et/ou un ou plusieurs brûleurs à gaz atmosphérique et/ou un ou plusieurs moyens de chauffage par induction. L'article selon l'invention peut également consister en un appareil de cuisson comportant un ou plusieurs éléments chauffants outre les éléments précités dans la définition de l'invention. L'invention englobe aussi bien des appareils de cuisson comportant une seule plaque que des appareils comportant plusieurs plaques, chacune de ces plaques étant le cas échéant à feu unique ou à feux multiples. Par le terme « feu », on entend un emplacement de cuisson. L'invention concerne également des appareils de cuisson mixtes dont la ou les plaques de cuisson comportent plusieurs types de feux (feux à gaz, feux radiants, halogènes ou à induction). En outre, l'invention n'est pas limitée à la fabrication de plaques ou modules de cuisson pour cuisinières ou tables de cuisson. Les articles fabriqués conformément à l'invention peuvent également être d'autres modules plans ou plaques devant présenter une grande insensibilité aux variations de température.

L'appareil de cuisson, outre les éléments internes de chauffage, comprend aussi généralement des moyens de commande et/ou de contrôle, les éléments internes étant recouverts par le substrat vitrocéramique, l'affichage autre que rouge étant vu au travers dudit substrat, pourvu le cas échéant, en une face ou en son sein d'au moins un moyen de masquage destiné à masquer au moins une partie desdits éléments internes.

La présente invention concerne également un procédé de fabrication d'un article selon l'invention, dans lequel on intègre, en particulier on imprime, sur au moins une zone du substrat vitrocéramique et/ou de la source et/ou d'un élément intermédiaire entre le substrat et la source, au moins un filtre jet d'encre d'épaisseur comprise entre 5 et 50 $\mu$m tel que mentionné précédemment selon l'invention, en particulier choisi selon le procédé de sélection précédemment évoqué. Ce filtre est inséré notamment sous forme d'une couche déposée sur la source ou le substrat vitrocéramique comme précédemment évoqué. On insère avantageusement ce filtre après la céramisation du verre précurseur (ou verre-mère ou green glass) permettant d'obtenir le substrat vitrocéramique.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...).

L'invention concerne également l'utilisation d'au moins un filtre jet d'encre d'épaisseur comprise entre 5 et 50 μm (dans un dispositif lumineux intégré dans un article vitrocéramique) pour obtenir un article présentant au moins une zone lumineuse, en particulier d'affichage, colorée.

D'autres détails et caractéristiques avantageuses ressortiront ci-après de la description de modes de réalisation non limitatifs de l'invention.

Exemple comparatif :

Dans cet exemple, l'article réalisé est un module de cuisson plan comprenant une plaque vitrocéramique (substrat), commercialisée sous la référence KeraVision par la société Eurokera, cette plaque présentant une face supérieure lisse et une face inférieure lisse (cette face pouvant également être munie de picots) et une épaisseur de 4 mm, l'article comprenant en outre un afficheur (source lumineuse) à LEDs blanc (afficheur 7 segments) commercialisé sous la référence HDSM-431W par la société AVAGO Technologies, et comprenant également une combinaison de deux filtres choisis dans la gamme des filtres colorés pour éclairage commercialisés par la société LEE FILTERS ou par la société Rosco, la source lumineuse étant fixée sous la plaque, et les filtres, rapportés sous la plaque vitrocéramique, se trouvant entre la source et la plaque. En fonctionnement, la source émet un faisceau lumineux qui traverse l'ensemble filtres/plaque au niveau de la zone d'affichage. La distance entre la source et la plaque est inférieure ou égale à 5 mm, elle peut notamment être inférieure à 2 mm, voire 1 mm.

Le choix des filtres est effectué de la façon suivante : on souhaite obtenir, à travers la plaque un affichage de couleur blanc chaud (de coordonnées colorimétriques cibles $x_c = 0,350$, $y_c = 0,315$) à partir de l'afficheur blanc dont les coordonnées colorimétriques initiales ont également été mesurées ($x_0 = 0,33 \pm 0,01$, $y_0 = 0,29 \pm 0,01$). On dispose de deux catalogues de filtres par absorption, colorés, produits par les sociétés Lee Filters et Rosco, ces filtres se présentant sous forme de films polymère (type PET) colorés. On cherche à déterminer quel(s) filtre(s) insérer entre l'afficheur et la plaque vitrocéramique pour obtenir la couleur cible.

On mesure la densité de flux énergétique $F_e(\lambda)$ de la source ainsi que la transmission optique spectrale des filtres et de la vitrocéramique (les mesures de transmission, sur la plaque vitrocéramique dont la face texturée (picots) a été supprimée le cas échéant par polissage, sont effectuées à l'aide d'une sphère intégrante, par exemple le modèle SPH-12-X de la société SphereOptics, couplée à un spectromètre, par exemple le modèle CAS140 de la société Instrument Systems). On évalue en particulier $(T_T(\lambda))_{i=1...N}$ pour les N combinaisons envisagées d'un ou de plusieurs filtres colorés Lee Filters ou Rosco avec la plaque vitrocéramique, puis on calcule les coordonnées colorimétriques $(x_i, y_i)_{i=1...N}$ correspondantes aux flux transmis $(T_T(\lambda)F_e(\lambda))_{i=1...N}$, et on place dans le diagramme de chromaticité CIE 1931 tous ces points $(x_i, y_i)_{i=1...N}$. On retient les combinaisons de filtres permettant d'obtenir des coordonnées colorimétriques $(x,y)$ associées au flux énergétique $T_T(\lambda) \times F_e(\lambda)$ émis par l'ensemble source/filtres/vitrocéramique telles que la valeur $d = ((x- x_c)^2 + (y - y_c)^2)^{1/2}$ soit minimisée, en particulier inférieure ou égal à 0,05, préférentiellement à 0,01.

On constate qu'avec l'utilisation d'un seul filtre catalogue on ne minimise pas d dans les limites fixées. En revanche, on constate que l'utilisation d'une combinaison de 2 filtres LEE FILTERS, en l'occurrence les filtres 063 et 243, avec la plaque vitrocéramique et l'afficheur donnés, permet d'obtenir la couleur cible souhaitée. La valeur de d mesurée est de 0.002, la luminance obtenue, qualifiant la sensation visuelle de luminosité, étant en outre de 71 cd/m$^2$. Le blanc obtenu au travers de l'article présente les coordonnées colorimétriques suivantes x = 0,348, y = 0,314).

Des tests thermiques ont en outre été effectués après insertion des filtres entre la plaque et la source, en déplaçant à l'aplomb des filtres une casserole chaude. Cette casserole a été chauffée lors d'une ébullition d'eau (engendrant une température en face inférieure de la vitrocéramique après déplacement de l'ordre de 60°C), une cuisson de frites (engendrant une température en face inférieure de la vitrocéramique après déplacement de l'ordre de 85°C) ou une casserole vide (engendrant une température en face inférieure de la vitrocéramique après déplacement de l'ordre de 200°C).

Les filtres mis au contact de la vitrocéramique ont été déformés après déplacement de la casserole chaude dans chacun des cas. Après espacement des filtres à 1mm de la plaque vitrocéramique, la déformation n'a été observée que dans le cas du déplacement de la casserole chaude vide. Après espacement des filtres à 2.5 mm de la plaque vitrocéramique, aucune déformation n'a été observée.

Exemple selon l'invention :

Dans cet exemple, on cherche à mettre au point un filtre par absorption approprié pour obtenir le rendu blanc recherché précédemment avec la plaque et l'afficheur mentionné dans l'exemple comparatif, en procédant par impression jet d'encre selon l'invention sur le substrat vitrocéramique. Les encres utilisées sont des encres acryliques à séchage UV, stables en température et à la lumière, choisies par exemple parmi les encres Anapurna M commercialisées par la société Agfa. On enduit préalablement la vitrocéramique par chiffonnage d'une couche mono-moléculaire d'un primaire sous forme d'amino-silanes en solution aqueuse stabilisés par des composés organométalliques (commercialisé sous la référence Hydropep 100 par la société Sika France) sur sa face inférieure dans la zone d'affichage au-dessus de la source. On dispose d'une base de données réunissant les spectres des filtres résultant des mélanges possibles entres les couleurs, notamment élémentaires, utilisées (en particulier cyan / magenta / jaune / noir). Pour chaque filtre de la base de couleurs, on détermine le point de couleur (x,y) de la source vue à travers la plaque plus le filtre, et on sélectionne le filtre permettant d'obtenir des coordonnées colorimétriques (x,y) associées au flux énergétique $T_T(\lambda) \times F_e(\lambda)$ émis par l'ensemble source/filtres/vitrocéramique telles que la valeur $d = ((x- x_c)^2 +(y - y_c)^2)^{1/2}$ soit minimisée, en particulier inférieure ou égal à 0,05, préférentiellement à 0,01 et encore plus préférentiellement à 0,005.

On imprime le filtre ainsi sélectionné, à une épaisseur de l'ordre de 10 $\mu$m, par impression jet d'encre sur la couche de primaire précitée en face inférieure de la vitrocéramique (en utilisant par exemple une imprimante Anapurna M avec une configuration d'impression à au moins 4 passes), le filtre résultant d'un mélange entre les couleurs de l'imprimante. Le filtre sélectionné dans le présent exemple pour obtenir le blanc recherché résulte ainsi d'un mélange de 76% (taux par rapport au taux maximum que l'imprimante peut délivrer pour cette couleur) d'encre de couleur primaire cyan de la marque Anapurna M commercialisée par la société Agfa, et de 34% (par rapport au taux maximum que l'imprimante peut délivrer pour cette couleur) d'encre primaire de couleur jaune de la marque Anapurna M commercialisée par la société Agfa, ces encres étant à base de diacrylate d'oxy-bis(méthyl-2,1-éthanediyle), d'acrylate d'isodécyle et d'acrylate ester.

La valeur de d mesurée est de 0.000, la luminance obtenue, qualifiant la sensation visuelle de luminosité, étant en outre de 109 cd/m$^2$, cette luminance étant meilleure que celle obtenue avec les filtres polymères. Le blanc obtenu au travers de l'article présente les coordonnées colorimétriques suivantes x = 0,350, y = 0,315 correspondant au blanc recherché.

Les mêmes tests thermiques que ceux effectués dans l'exemple comparatif ont en outre été effectués sur l'article muni du filtre jet d'encre d'épaisseur de l'ordre de 10 $\mu$m ainsi obtenu, en déplaçant à l'aplomb du filtre une casserole chaude. On n'a observé aucune déformation ni conséquence optique dans aucun des cas. On a donc observé une meilleure tenue thermique pour l'article selon l'invention que dans le cas de l'utilisation de filtres polymères selon l'exemple comparatif. La solution selon l'invention utilise ainsi des compositions résistant thermiquement à toutes les températures d'exposition du bandeau de commande, que ce soit pour une application induction ou radiant, ce qui n'est pas le cas d'une solution de type filtres polymères, le filtre devant être déporté de la vitrocéramique d'au moins 1mm dans ce dernier cas, d'où une augmentation de la complexité de la mise en œuvre du filtre.

Les articles, en particulier plaques, selon l'invention peuvent notamment être utilisées avec avantage pour réaliser une nouvelle gamme de plaques de cuisson pour cuisinières ou tables de cuisson, mais peuvent également être utilisés avec avantages pour réaliser des éléments de paroi ou des parois (par exemple des portes ou partie de portes) de fours, etc.

**Revendications**

1. Article présentant au moins une zone lumineuse, en particulier d'affichage, colorée, ledit article comprenant au moins un substrat vitrocéramique ayant une transmission lumineuse allant de 0,8% à 40% et une transmission optique d'au moins 0,1% pour au moins une longueur d'onde comprise dans le domaine allant de 420 à 780 nm, au moins une source lumineuse, et au moins un filtre optique coloré obtenu par impression jet d'encre et d'épaisseur comprise entre 5 et 50 $\mu$m, ce filtre présentant une transmission lumineuse d'au moins 5%, de façon à former au moins une zone lumineuse, en particulier d'affichage, colorée, en au moins une zone du substrat vitrocéramique.

2. Article selon la revendication 1, **caractérisé en ce que** le filtre est obtenu par superposition des dépôts de plusieurs couleurs, dont généralement des couleurs élémentaires.

3. Article selon l'une des revendications 1 à 2, **caractérisé en ce que** le filtre est défini par un ratio entre des couleurs, notamment élémentaires, par exemple entre le cyan, le magenta, le jaune et le noir.

4. Article selon l'une des revendications 1 à 3, **caractérisé en ce que** le filtre est obtenu à partir d'encre(s), en particulier à partir d'encres de couleurs élémentaires différentes, chaque encre comprenant au moins un médium et/ou un solvant, par exemple à des taux de de 35 à 90 % en poids, au moins des colorants ou des pigments, par exemple à des taux de 1 à 10 % en poids, et éventuellement un ou des additifs, par exemple à des taux de 0 à 15% en poids, le médium étant de préférence un médium acrylique à séchage UV.

5. Article selon la revendication 4, **caractérisé en ce que** la taille des particules présentes le cas échéant dans la ou les encres est inférieure à 1 $\mu$m, la viscosité au dépôt de la ou desdites encres est comprise entre 5 et 15 mPa.s, et la tension superficielle/tension de surface de la ou des encres est comprise entre 15 et 50 mN/m.

**6.** Article selon l'une des revendications 1 à 5, **caractérisé en ce que** le filtre jet d'encre est appliqué ou imprimé sur le substrat vitrocéramique et/ou sur au moins une source lumineuse et/ou sur au moins un élément intermédiaire.

**7.** Article selon la revendication 6, **caractérisé en ce que** la partie de l'article sur laquelle le filtre est appliqué est traitée préalablement au dépôt de l'encre par le dépôt d'un promoteur d'adhésion et/ou par un traitement de surface non chimique, notamment de type plasma.

**8.** Article selon la revendication 7, **caractérisé en ce qu'**au moins une couche d'accrochage ou couche d'un primaire d'adhésion, en particulier à base de silane(s) tel(s) qu'un ou des amino-silanes et/ou un ou des silanes méthacrylates et/ou un ou des époxy silanes et/ou à base de (poly)siloxane(s), est présente entre le filtre jet d'encre et la partie de l'article sur laquelle le filtre est appliqué.

**9.** Article selon l'une des revendications 1 à 8, **caractérisé en ce que** le filtre est choisi en fonction de la vitrocéramique et éventuellement de la source lumineuse, de façon à former au moins une zone lumineuse colorée autre que rouge, et notamment une zone colorée de couleur blanche et/ou d'une couleur de synthèse obtenue par un mélange à plusieurs longueurs d'onde.

**10.** Article selon l'une des revendications 1 à 9, **caractérisé en ce que** le filtre est un filtre compensant la transmission de la vitrocéramique afin que l'ensemble vitrocéramique/filtre présente une transmission totale optique approximativement constante dans le domaine spectral choisi.

**11.** Article selon l'une des revendications 1 à 9, **caractérisé en ce que** l'on utilise un ou plusieurs filtres pour obtenir une couleur cible choisie, identique ou différente de la couleur initiale de la source.

**12.** Article selon l'une des revendications 1 à 11, ou dispositif de cuisson et/ou de maintien à haute température comportant un article selon l'une des revendications 1 à 11, et comportant un ou plusieurs éléments de chauffage.

**13.** Procédé de sélection d'au moins un filtre jet d'encre pour la réalisation d'un article selon l'une des revendications 1 à 12 présentant au moins une zone lumineuse, en particulier d'affichage, colorée, selon lequel on détermine le minimum de transmission $T_{Vmin}$ de la vitrocéramique dans le domaine spectral considéré, et on cherche un filtre permettant d'obtenir une valeur de transmission totale $T_T(\lambda)$ de l'ensemble vitrocéramique/filtre(s) constante égale à $T_{Vmin}$ quelle que soit la longueur d'onde du domaine spectral considéré, à une différence $T_T(\lambda)$ - $T_{Vmin}$ près inférieure ou égale à 0,1.

**14.** Procédé de sélection d'au moins un filtre jet d'encre pour la réalisation d'un article selon l'une des revendications 1 à 12 présentant au moins une zone lumineuse, en particulier d'affichage, colorée, selon lequel on détermine les coordonnées colorimétriques $(x_c,y_c)$ de la couleur cible souhaitée et on cherche un filtre permettant d'obtenir des coordonnées colorimétriques $(x,y)$ associées au flux énergétique $T_T(\lambda)$ x $F_e(\lambda)$ émis par l'ensemble source/filtre/vitrocéramique telles que la valeur $d = ((x-x_c)^2 +(y-y_c)^2)^{1/2}$ soit inférieure ou égal à 0,05.

**15.** Procédé de fabrication d'un article selon l'une des revendications 1 à 12, dans lequel on intègre, en particulier on imprime, sur au moins une zone du substrat vitrocéramique et/ou de la source et/ou d'un élément intermédiaire entre le substrat et la source, au moins un filtre jet d'encre d'épaisseur comprise entre 5 et 50 $\mu$m, en particulier choisi selon le procédé de sélection de l'une des revendications 13 ou 14.

**Patentansprüche**

**1.** Artikel, der mindestens eine farbige Leuchtzone, insbesondere zur Anzeige, aufweist, wobei der Artikel mindestens ein Glaskeramiksubstrat mit einer Lichtdurchlässigkeit, die von 0,8 % bis 40 % reicht, und einer optischen Durchlässigkeit von mindestens 0,1 % für mindestens eine Wellenlänge, die in dem Bereich, der von 420 bis 780 nm reicht, liegt, mindestens eine Lichtquelle und mindestens einen durch Tintenstrahldruck und einer Dicke, die zwischen 5 und 50 $\mu$m liegt, erhaltenen farbigen optischen Filter umfasst, wobei dieser Filter eine Lichtdurchlässigkeit von mindestens 5 % aufweist, sodass mindestens eine farbige Leuchtzone, insbesondere zur Anzeige, in mindestens einer Zone des Glaskeramiksubstrats gebildet wird.

**2.** Artikel nach Anspruch 1, **dadurch gekennzeichnet, dass** der Filter durch Überlagerung von Abscheidungen mehrerer Farben, davon im Allgemeinen Elementarfarben, erhalten wird.

**3.** Artikel nach einem der Ansprüche 1 bis 2, **dadurch gekennzeichnet, dass** der Filter durch ein Verhältnis zwischen Farben, besonders elementaren, zum Beispiel zwischen Cyan, Magenta, Gelb und Schwarz, definiert ist.

**4.** Artikel nach einem der Ansprüche 1 bis 3, **dadurch gekennzeichnet, dass** der Filter ausgehend von Tinte(n), insbesondere ausgehend von Tinten verschiedener Elementarfarben, erhalten wird, wobei jede Tinte mindestens ein Medium und/oder Lösungsmittel, zum Beispiel in Mengen von 35 bis 90 Gew.-%, mindestens Farbstoffe oder Pigmente, zum Beispiel in Mengen von 1 bis 10 Gew.-%, und wahlweise ein oder mehrere Additive, zum Beispiel in Mengen von 0 bis 15 Gew.-%, umfasst, wobei das Medium vorzugsweise ein UVhärtbares Acrylmedium ist.

**5.** Artikel nach Anspruch 4, **dadurch gekennzeichnet, dass** die Größe der Partikel, die in der oder den Tinten gegebenenfalls vorhanden sind, kleiner als 1 $\mu$m ist, die Viskosität bei der Abscheidung der Tinte(n) zwischen 5 und 15 mPa.s liegt und die Oberflächenspannung/Spannung der Oberfläche der Tinte(n) zwischen 15 und 50 mN/m liegt.

**6.** Artikel nach einem der Ansprüche 1 bis 5, **dadurch gekennzeichnet, dass** der Tintenstrahlfilter auf das Glaskeramiksubstrat und/oder auf mindestens eine Lichtquelle und/oder auf mindestens ein Zwischenelement aufgebracht oder aufgedruckt ist.

**7.** Artikel nach Anspruch 6, **dadurch gekennzeichnet, dass** der Teil des Artikels, auf den der Filter aufgebracht ist, vor der Abscheidung der Tinte durch die Abscheidung eines Haftvermittlers und/oder durch eine nicht-chemische Oberflächenbehandlung, besonders vom Plasmatyp, behandelt wird.

**8.** Artikel nach Anspruch 7, **dadurch gekennzeichnet, dass** mindestens eine Bindungsschicht oder eine Schicht eines Haftprimers, insbesondere auf Basis von Silan(en) wie einem Aminosilan oder Aminosilanen und/oder einem Methacrylatsilan oder Methacrylatsilanen und/oder einem Epoxysilan oder Epoxysilanen und/oder auf Basis von (Poly)siloxan(en), zwischen dem Tintenstrahlfilter und dem Teil des Artikels, auf den der Filter aufgebracht ist, vorhanden ist.

**9.** Artikel nach einem der Ansprüche 1 bis 8, **dadurch gekennzeichnet, dass** der Filter in Abhängigkeit von der Glaskeramik und wahlweise von der Lichtquelle so gewählt ist, dass er mindestens eine farbige Leuchtzone außer Rot und besonders eine farbige Zone weißer Farbe und/oder einer Synthesefarbe bildet, die durch ein Mischen bei mehreren Wellenlängen erhalten wird.

**10.** Artikel nach einem der Ansprüche 1 bis 9, **dadurch gekennzeichnet, dass** der Filter ein Filter ist, der die Durchlässigkeit der Glaskeramik kompensiert, damit die Glaskeramik/Filter-Anordnung eine annähernd konstante optische Gesamtdurchlässigkeit in dem gewählten Spektralbereich aufweist.

**11.** Artikel nach einem der Ansprüche 1 bis 9, **dadurch gekennzeichnet, dass** ein oder mehrere Filter verwendet werden, um eine gewählte Zielfarbe zu erhalten, die mit der ursprünglichen Farbe der Quelle identisch oder davon verschieden ist.

**12.** Artikel nach einem der Ansprüche 1 bis 11 oder Vorrichtung zum Kochen und/oder Halten bei hoher Temperatur, enthaltend einen Artikel nach einem der Ansprüche 1 bis 11 und enthaltend ein oder mehrere Heizelemente.

**13.** Verfahren zur Auswahl mindestens eines Tintenstrahlfilters zur Herstellung eines Artikels nach einem der Ansprüche 1 bis 12, der mindestens eine farbige Leuchtzone, insbesondere zur Anzeige, aufweist, nach dem die minimale Durchlässigkeit Tvmin der Glaskeramik in dem in Betracht gezogenen Spektralbereich ermittelt wird und wobei nach einem Filter gesucht wird, der ermöglicht, einen konstanten Gesamtdurchlässigkeitswert $T_T(\lambda)$ der Glaskeramik/Filter-Anordnung gleich Tvmin, unabhängig von der Wellenlänge des in Betracht gezogenen Spektralbereichs, bei einer Differenz $T_T(\lambda)$ - $T_{Vmin}$ nahe kleiner oder gleich 0,1, zu erhalten.

**14.** Verfahren zur Auswahl mindestens eines Tintenstrahlfilters zur Herstellung eines Artikels nach einem der Ansprüche 1 bis 12, der mindestens eine farbige Leuchtzone, insbesondere zur Anzeige, aufweist, nach dem die kolorimetrischen Koordinaten $(x_c,y_c)$ der gewünschten Zielfarbe ermittelt werden und ein Filter gesucht wird, der ermöglicht, kolorimetrische Koordinaten (x,y) zu erhalten, die mit dem Energiefluss $T_T(\lambda)$ x $F_e(\lambda)$ assoziiert sind, der von der Quelle/Filter/Glaskeramik-Anordnung emittiert wird, derart, dass der Wert d = $((x-x_c)^2 +(y - y_c)^2)^{1/2}$ kleiner oder gleich 0,05 ist.

**15.** Verfahren zur Fertigung eines Artikels nach einem der Ansprüche 1 bis 12, in dem auf mindestens einer Zone des Glaskeramiksubstrats und/oder der Quelle und/oder eines Zwischenelements zwischen dem Substrat und der Quelle mindestens ein Tintenstrahlfilter einer Dicke zwischen 5 und 50 $\mu$m, insbesondere gewählt nach dem Auswahlverfahren eines der Ansprüche 13 oder 14, integriert, insbesondere aufgedruckt wird.

**Claims**

**1.** An article having at least one colored luminous region, in particular for display, said article comprising at least one glass-ceramic substrate having a luminous transmission ranging from 0.8% to 40% and an optical transmission of at least 0.1% for at least one wavelength in the range extending from 420 to 780 nm, at least one light source, and at least one color optical filter obtained by inkjet printing and having a thickness comprised between 5 and 50 μm, this filter presenting a luminous transmission of at least 5%, so as to form at least one colored luminous region, in particular for display, in at least one region of the glass-ceramic substrate.

2. The article as claimed in claim 1, **characterized in that** the filter is obtained by superposing depositions of a number of colors, including generally elementary colors.

3. The article as claimed in either one of claims 1 and 2, **characterized in that** the filter is defined by a ratio of colors, especially elementary colors, for example a ratio between the colors cyan, magenta, yellow and black.

4. The article as claimed in one of claims 1 to 3, **characterized in that** the filter is obtained from one or more inks, in particular from inks of different elementary colors, each ink comprising at least one medium and/or one solvent, for example in amounts of 35 to 90% by weight, at least dyes or pigments, for example in amounts of 1 to 10% by weight, and optionally one or more additives, for example in amounts of 0 to 15% by weight, the medium preferably being a UV-curable acrylic medium.

5. The article as claimed in claim 4, **characterized in that** the size of the particles present where appropriate in the one or more inks is smaller than 1 μm, the viscosity on deposition of said one or more inks is comprised between 5 and 15 mPa.s, and the surface tension of the one or more inks is comprised between 15 and 50 mN/m.

6. The article as claimed in one of claims 1 to 5, **characterized in that** the inkjet filter is applied or printed onto the glass-ceramic substrate and/or onto at least one light source and/or onto at least one intermediate element.

7. The article as claimed in claim 6, **characterized in that** the part of the article on which the filter is applied is treated before the ink is deposited by depositing an adhesion promoter and/or by carrying out a nonchemical surface treatment, in particular a plasma-type treatment.

8. The article as claimed in claim 7, **characterized in that** at least one attaching layer or primer adhesion layer, in particular based on one or more silanes such as one or more aminosilanes and/or one or more methacrylate silanes and/or one or more epoxy silanes and/or based on one or more (poly)siloxanes, is present between the inkjet filter and the part of the article to which the filter is applied.

9. The article as claimed in one of claims 1 to 8, **characterized in that** the filter is chosen depending on the glass-ceramic and possibly on the light source, so as to form at least one luminous region having a color other than red, and especially a colored region having a white color and/or a synthetic color obtained by a mixing at several wavelengths.

10. The article as claimed in one of claims 1 to 9, **characterized in that** the filter is a filter that compensates the transmission of the glass-ceramic so that the glass-ceramic/filter assembly has a total optical transmission that is approximately constant in the chosen spectral range.

11. The article as claimed in one of claims 1 to 9, **characterized in that** one or more filters are used to obtain a target color, identical to or different from the initial color of the source.

12. The article as claimed in one of claims 1 to 11, or a device for cooking and/or maintaining a high temperature comprising an article according to one of claims 1 to 11, and comprising one or more heating elements.

13. A method for selecting at least one inkjet filter for producing an article according to one of claims 1 to 12 having at least one colored luminous region, in particular for display, according to which the minimum transmission $T_{Vmin}$ of the glass-ceramic is determined in the spectral range considered, and a filter is sought allowing a constant total transmission value $T_T(\lambda)$ for the glass-ceramic/filter(s) assembly equal to $T_{vmin}$ to be obtained whatever the wavelength in the spectral range considered, with a difference $T_T(\lambda) - T_{Vmin}$ less than or equal to 0.1.

14. A method for selecting at least one inkjet filter for producing an article according to one of claims 1 to 12 having at least one colored luminous region, in particular for display, according to which the color coordinates $(x_c, y_c)$ of the desired target color are determined and a filter is sought allowing color coordinates $(x, y)$ associated with the energy flux $T_T(\lambda) \times F_e(\lambda)$ emitted by the source/filter/glass-ceramic assembly to be obtained such that the value $d = ((x - x_c)^2 + (y - y_c)^2)^{1/2}$ is less than or equal to 0.05.

15. A process for manufacturing an article as claimed in one of claims 1 to 12, in which at least one inkjet filter, of thickness comprised between 5 and 50 μm, in particular one chosen using the selecting method as claimed in either one of claims 13 and 14, is integrated, in particular printed, on at least one region of the glass-ceramic substrate and/or of the source and/or of an intermediate element between the substrate and the source.

**EP 2 885 254 B1**

## RÉFÉRENCES CITÉES DANS LA DESCRIPTION

**Documents brevets cités dans la description**

- WO 2012001300 A